(19) Europäisches Patentamt
European Patent Office
Office européen des brevets

(11) EP 3 193 209 A1

(12) # EUROPEAN PATENT APPLICATION

published in accordance with Art. 153(4) EPC

(43) Date of publication:
**19.07.2017 Bulletin 2017/29**

(21) Application number: **15833280.9**

(22) Date of filing: **24.04.2015**

(51) Int Cl.:
***G02F 1/137*** *(2006.01)* ***G02F 1/1334*** *(2006.01)*

(86) International application number:
**PCT/KR2015/004090**

(87) International publication number:
**WO 2016/027958 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.08.2014 KR 20140108097**

(71) Applicants:
- **Samsung Electronics Co., Ltd.**
  **Suwon-si, Gyeonggi-do 443-742 (KR)**
- **NDIS Corporation**
  **Asan-si, Chungcheongnam-do 336-795 (KR)**

(72) Inventors:
- **ROH, Hee Yuel**
  **Suwon-si**
  **Gyeonggi-do 443-750 (KR)**
- **KWON, Soon Bum**
  **Asan-si**
  **Chungcheongnam-do 336-747 (KR)**
- **KIM, Kyoung Sun**
  **Suwon-si**
  **Gyeonggi-do 442-718 (KR)**
- **KIM, Joo Ho**
  **Suwon-si**
  **Gyeonggi-do 443-851 (KR)**
- **LEE, Burm Young**
  **Cheonan-si**
  **Chungcheongnam-do 331-760 (KR)**
- **CHUNG, Jun Sung**
  **Seongnam-si**
  **Gyeonggi-do 463-863 (KR)**
- **JIN, Yan**
  **Chungcheongnam-do 336-797 (KR)**

(74) Representative: **Gulde & Partner**
**Patent- und Rechtsanwaltskanzlei mbB**
**Wallstraße 58/59**
**10179 Berlin (DE)**

(54) ## DISPLAY DEVICE AND MANUFACTURING METHOD THEREFOR

(57) The present disclosure relates to a display device in which the same driving voltage is applied to pixels and a manufacturing method thereof.

One aspect of a display device comprises a first substrate; a second substrate; and a liquid crystal layer disposed between the first substrate and the second substrate and comprising a plurality of sub-cells, wherein the plurality of sub-cells respectively comprises a cholesteric liquid crystal and a polymer cured to fix a helical pitch of the cholesteric liquid crystal.

[Fig. 2]

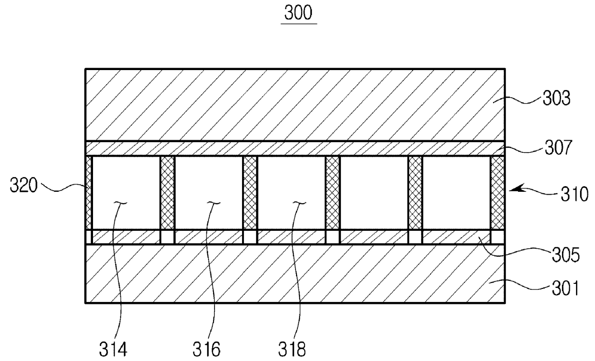


EP 3 193 209 A1

**Description**

Technical Field

The present disclosure relates to a display device in which the same driving voltage is applied to pixels and a manufacturing method thereof.

Background Art

Display devices are devices to display visual and stereoscopic image information. Recently, flat display devices having excellent properties such as high image quality have been developed.

Examples of flat display devices include thin film transistor liquid crystal display devices (TFT-LCDs) and liquid crystal display devices (LCDs). These display devices may be classified into transmissive display devices and reflective display devices.

A TFT-LCD, as a transmissive liquid crystal display device, includes a light source for backlighting disposed under a lower substrate which consumes a large amount of power.

Thus, cholesteric liquid crystal display devices have been developed as reflective display devices. A cholesteric liquid crystal display device may be implemented by stacking three cholesteric liquid crystal display elements having different pitches or partitioning cholesteric liquid crystals having different pitches and disposed on the same layer by barrier walls to realize full color.

The display device implemented by stacking three cholesteric liquid crystal display elements having different pitches may have an increased thickness and may be driven inefficiently, and thus manufacturing costs therefor may increase. On the contrary, manufacturing costs for the display device implemented by partitioning cholesteric liquid crystals having different pitches and disposed on the same layer using barrier walls may decrease since a plurality of driving circuits and liquid crystal layers are not required therein. However, the latter display device may have a complex driving circuit since different driving voltages are applied to liquid crystals of R, G, and B pixels.

Disclosure

Technical Problem

An aspect of the present disclosure is to provide a display device including a liquid crystal layer formed by using a cholesteric liquid crystal composition including a monomer and a photosensitive chiral dopant in which the same driving voltage is applied to liquid crystal cells by adjusting light intensities respectively applied to the sub-cells and a manufacturing method thereof.

Technical Solution

According to an aspect of the present invention, there is provided a display device. The display device includes a first substrate; a second substrate; and a liquid crystal layer disposed between the first substrate and the second substrate and comprising a plurality of sub-cells, wherein the plurality of sub-cells respectively comprises a cholesteric liquid crystal and a polymer cured to fix a helical pitch of the cholesteric liquid crystal.

The helical pitches may be adjusted to reflect light having different wavelength bands.

The display device may further comprise barrier walls partitioning the liquid crystal layer into a plurality of sub-cells.

The plurality of sub-cells may have different polymer network structures to reflect light having different wavelength bands.

The display device may further comprise a light absorbing layer disposed under the liquid crystal layer.

According to another aspect of the present invention, there is provided a method of manufacturing a display device. The method may comprise mixing a monomer and a photosensitive chiral dopant in a cholesteric liquid crystal composition; forming a liquid crystal layer by coating the liquid crystal composition on a substrate; and forming a plurality of liquid crystal cells having different reflection wavelengths by exposing the liquid crystal layer to light.

The monomer may comprise at least one acrylate monomer selected from isobutyl acrylate, isobutyl methacrylate, 1,3,5-triallyl-1,3,5-triazine-2,4,6,(1H,3H,5H)-trione.

The monomer may comprise an acrylate monomer, a crosslinking agent, and a photopolymerization initiator mixed in a ratio of 90:9:1 in the mixing of the monomer in the cholesteric liquid crystal composition.

The mixing of the monomer and the photosensitive chiral dopant in the cholesteric liquid crystal composition may comprise mixing the cholesteric liquid crystal, the monomer, and the photosensitive chiral dopant in a weight ratio

of 84.5:12.5:3.0.

The photosensitive chiral dopant may comprise methyloxy-cinnamoylglucitol in the mixing of the photosensitive chiral dopant in the cholesteric liquid crystal composition.

The method may further comprise forming barrier walls to partition the liquid crystal layer into a plurality of sub-cells by exposing the liquid crystal layer to light.

The exposing of the liquid crystal layer to light may comprise exposing the liquid crystal layer to light by using a UV band pass filter.

The forming of a plurality of liquid crystal cells having different reflection wavelengths by exposing the liquid crystal layer to light may comprise forming a plurality of liquid crystal cells having different reflection wavelengths by exposing the plurality of sub-cells to light.

The forming of a plurality of liquid crystal cells having different reflection wavelengths by exposing the liquid crystal layer to light may comprise forming a plurality of liquid crystal cells having different reflection wavelengths by adjusting the degrees of formation of polymer networks of the monomer depending on an exposure dose.

The forming of a plurality of liquid crystal cells having different reflection wavelengths by exposing the liquid crystal layer to light may comprise forming red, green, and blue liquid crystal cells having pitches respectively corresponding to red, green, and blue wavelength bands.

The substrate may be fabricated by coating at least one of indium tin oxide (ITO), indium zinc oxide (IZO), and aluminum-doped zinc oxide (ZAO) on a polycarbonate substrate in the forming of a liquid crystal layer by coating the liquid crystal composition on a substrate.

## Advantageous Effects

According to the display device configured as described above and the manufacturing method thereof, driving voltages applied to pixels may be adjusted to be the same.

Thus, a driving circuit of the display device may be simplified.

In addition, since a plurality of liquid crystal layers are not stacked or a mediating film is not used, transmittance may be increased and manufacturing costs therefor may be reduced.

## BRIEF DESCRIPTION OF THE DRAWINGS

FIG. 1 is a diagram illustrating a structure of a terminal device including a display device according to an embodiment.

FIG. 2 is a view illustrating a structure of the display device.

FIG. 3 is view illustrating a structure of electrodes disposed in the display device.

FIG. 4 is a view illustrating a structure of a liquid crystal layer disposed in the display device.

FIG. 5 is a schematic diagram illustrating light reflection in accordance with pitch p.

FIG. 6 is a diagram illustrating a homeotropic state of liquid crystal molecules.

FIG. 7 is a diagram illustrating a planar state of liquid crystal molecules.

FIG. 8 is diagram illustrating a focal conic state of liquid crystal molecules.

FIG. 9 is a view illustrating a structure of a display device according to another embodiment.

FIG. 10 is a flowchart for describing a process of manufacturing the display device according to an embodiment.

FIGS. 11 to 17 are views illustrating the process of manufacturing the display device.

FIG. 18 is the graph illustrating driving voltages of the display device fabricated according to example 1.

Best Mode

The embodiments described in the specification and shown in the drawings are only illustrative and are not intended to represent all aspects of the present disclosure, such that various equivalents and modifications may be made without departing from the spirit of the disclosure.

Hereinafter, embodiments of the present disclosure will be described in detail with reference to the accompanying drawings.

FIG. 1 is a diagram illustrating a structure of a terminal device including a display device according to an embodiment. FIG. 2 is a view illustrating a structure of the display device. FIG. 3 is view illustrating a structure of electrodes disposed in the display device. FIG. 4 is a view illustrating a structure of a liquid crystal layer disposed in the display device.

Display devices are devices to display images. Display devices may be provided in mobile communication terminals such as mobile phones, tablet PCs, and notebook computers and display images in cooperation with intrinsic functions of the terminals. Display devices may also be provided in home appliances such as refrigerators and air conditioners and display images in cooperation with intrinsic functions and additional functions thereof.

Among these display devices, embodiments of the present disclosure will be described based on a display device provided in a smartphone having computer-supported functions such as communications through the Internet and information search.

As illustrated in FIG. 1, a smartphone 1 includes a main body 100, an input unit 200, and a display device 300.

The main body 100 includes a bezel defining an appearance of the smartphone 1 and covering boundaries of the input unit 200 and the display device 300.

The input unit 200 and the display device 300 are disposed on the front surface of the main body 100, and a drive module configured to control operation of the smartphone 1 is disposed in the main body 100.

The input unit 200 receives an input of a user’s command and transmits an input signal to the drive module. The input unit 200 may be implemented using at least one of button type and touch type input units. If the input unit 200 if a touch type, the smartphone 1 further includes a touch panel (not shown) disposed on the display device 300.

The display device 300 displays an image related to a phone call, a menu image related to an icon such as an application, and an image of executing contents in response to a driving command of the drive module.

The images may include a still image (still frame) obtained by repeatedly outputting a single frame for a predetermined time period like a static picture and a moving image perceived as continuous motion.

As illustrated in FIG. 2, the display device 300 includes a first substrate 301, a second substrate 303 spaced apart from the first substrate 301, a first electrode 305 disposed on one surface of the first substrate 301, a second electrode 307 disposed on one surface of the second substrate 303, and a liquid crystal layer 310 disposed between the first electrode 305 and the second electrode 307.

The first substrate 301 and the second substrate 303 may be formed of flexible glass or a transparent plastic material.

If a plastic material is used, a thin and light-weight display device 300 may be implemented. Due to easily bent or arched properties, the display device 300 may be applied various fields based on high degree of design freedom. Polycarbonate may be used as the plastic material.

The first and second electrodes 305 and 307 may be transparent electrodes to increase light transmittance of the display device 300. More particularly, the first and second electrodes 305 and 307 may be formed of indium tin oxide (ITO), indium zinc oxide (IZO), aluminum-doped zinc oxide (AZO), or the like.

As illustrated in FIG. 3, the first and second electrodes 305 and 307 may be linearly aligned parallel to the first substrate 301 and the second substrate 303, respectively. In this case, the first and second electrodes 305 and 307 vertically intersect at portions constituting pixels.

As described above, by aligning the first and second electrodes 305 and 307 to drive the display device 300 as a passive matrix type, the display device 300 may be easily processed and driven.

In addition, transistors may be mounted on respective pixels to drive the display device 300 as an active matrix type. That is, a TFT panel (not shown) including transistors to drive pixels may be disposed on the first substrate 301 of the display device 300.

Transistors (not shown) to switch respective pixels may be disposed on the TFT panel. In this case, a common electrode (not shown) may be disposed on an inner surface of the second substrate 303 to form an electric field in the liquid crystal layer 310 together with output voltages of the transistors.

The liquid crystal layer 310 is partitioned into a plurality of sub-cells respectively accommodate cholesteric liquid crystals having different pitches p to realize different colors. In this regard, the plurality of sub-cells includes a first sub-cell 314, a second sub-cell 316, and a third sub-cell 318. A group of the first sub-cell 314, the second sub-cell 316, and the third sub-cell 318 may constitute one basic pixel.

For example, the first sub-cell 314 may be a first liquid crystal cell 314a a wavelength band corresponding to blue light as a reflection wavelength band, the second sub-cell 316 may be a second liquid crystal cell 316a having a

wavelength band corresponding to green light as a reflection wavelength band, and the third sub-cell 318 may be a third liquid crystal cell 318a having a wavelength band corresponding to red light as a reflection wavelength band.

The first to third sub-cells 314, 316, and 318 may be a magenta sub-pixel, a yellow sub-pixel, and a cyan sub-pixel, respectively.

Briefly, the liquid crystal layer 310 includes a plurality of sub-cells and has a structure in which the sub-cells are repeatedly disposed on the same plane. As a result, the thickness of the liquid crystal layer 310 may decrease, and light efficiency may increase. Hereinafter, the embodiment will be exemplarily described based on the first, second, and third sub-cells 314, 316, and 318 for descriptive convenience, without being limited thereto.

The sub-cells of the liquid crystal layer 310 may be partitioned by barrier walls 320. The barrier walls 320 may allow orientations of the liquid crystals or cell gaps to be uniformly maintained against external factors.

Hereinafter, constituent elements of the liquid crystal layer 310 will be described in more detail.

The liquid crystal layer 310 includes cholesteric liquid crystals and photopolymerizable polymers cured to fix pitches p of the cholesteric liquid crystals.

The cholesteric liquid crystals may be prepared by mixing a nematic liquid crystal compound with a chiral dopant that induces a periodic helical structure.

The nematic liquid crystal compound is a non-photosensitive liquid crystal compound that is not polymerized nor degraded by light. Thus, the nematic liquid crystal compound may be maintained in the form of monomers even when exposed to light and oriented in a predetermined direction by a voltage applied thereto or the like, which will be described later.

As the chiral dopant, a photosensitive chiral dopant reacting upon receiving ultraviolet (UV) light may be used. The photosensitive chiral dopant may be a photopolymerizable chiral dopant that is polymerized to a compound having chiral characteristics upon receiving light, a photodegradable chiral dopant that is degraded by light, a photoisomerizable chiral dopant that is isomerized by light, or any combination thereof.

When the photosensitive chiral dopant absorbs light, helical twisting power (HTP) of molecules thereof may change. For example, a structure of the photoisomerizable chiral dopant is converted from a trans isomer to a cis isomer, or vice versa, upon absorbing light, resulting in a decrease or increase in the helical twisting power.

The photoisomerizable chiral dopant may be methyloxy-cinnamoylglucitol represented by Formula 1 below, without being limited thereto.

Formula 1

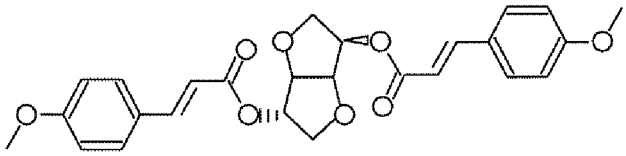

Referring to FIG. 4, the twisted structure of cholesteric liquid crystal molecules is periodically repeated. In this regard, a distance over which a full twist of the helical structure is completed is known as pitch p, and the cholesteric liquid crystal molecules may have a property that selectively reflects light in accordance with the twisted orientation of the helical structure and a repeating structure thereof.

The reflection wavelength band is determined by the pitch p. if an average refractive index of the cholesteric liquid crystal molecules is n, a wavelength $\lambda$ of light at which reflection is maximized may be calculated using Equation 1 below.

Equation 1

$$\lambda = n \cdot p$$

Also, when the ordinary refractive index of liquid crystal molecules is no and the extraordinary refractive index of the liquid crystal molecules is ne, the relationship between the reflection wavelength band and the pitch p may be expressed using Equation 2 below.

Equation 2

$$n_o \cdot p < \lambda < n_e \cdot p$$

In this case, the pitch p is adjusted by an amount of the chiral dopant. As the amount of the chiral dopant increases, the pitch p decreases and the reflection wavelength band decreases. As the amount of the chiral dopant decreases, the pitch p increases and the reflection wavelength band increases.

The photopolymerizable polymer fixes the helical pitch p of the cholesteric liquid crystal. The photopolymerizable polymer is provided as a monomer while the display device 300 is manufactured. When the monomer is exposed to light, polymerization between a photopolymerization initiator and a crosslinking agent contained in the monomer occur to form a polymer network.

The polymer network is formed in various ways in accordance with light intensity applied thereto and the helical pitch p may be determined in accordance with the degree of formation of the polymer network. That is, the polymer network is formed in a more complex manner as the light intensity increases. Accordingly, the complex polymer network increases the pitch p thereby increasing the reflection wavelength band.

Hereinafter, the relationship between the size of the pitch p and the reflection wavelength band will be described with reference to FIG. 5.

FIG. 5 is a schematic diagram illustrating light reflection in accordance with pitch p.

Following the Bragg's law, the liquid crystal layer 310 reflects external light. As illustrated in FIG. 5, the wavelength of light reflected by the liquid crystal layer 310 varies depending on the pitch p of the liquid crystal.

A liquid crystal having one pitch P1 may reflect light having a first wavelength region CL1. A liquid crystal having another pitch P2 may reflect light having a second wavelength region CL2. A liquid crystal having another pitch P3 may reflect light having a third wavelength region CL3. Based on Equation 1, the first wavelength region CL1 may be a short wavelength region, the third wavelength region CL3 may be a long wavelength region, and the second wavelength region CL2 may be a wavelength region between the first wavelength region CL1 and the third wavelength region CL3. For example, the first wavelength region may be a blue wavelength region, the second wavelength region may be a green wavelength region, and the third wavelength region may be a red wavelength region.

Thus, in a display panel including red, green, and blue pixels, the wavelength region of light reflected by the liquid crystal layer 310 may be optionally controlled by adjusting the cholesteric liquid crystal constituting the red pixel to have the longest pitch p, adjusting the cholesteric liquid crystal constituting the blue pixel to have the shortest pitch p, and adjusting the cholesteric liquid crystal constituting the green pixel to have a medium pitch p therebetween.

The liquid crystal layer 310 may have different textures of the cholesteric liquid crystals depending on an electric field applied thereto. The textures of the cholesteric liquid crystals may be classified into a planar state, a focal conic state, and a homeotropic state.

The liquid crystal layer 310 has bistability that is a situation in which the cholesteric liquid crystals are stable in both of the planar state and the focal conic state and light is reflected or scattered even when an electric field is not applied thereto. Upon application of a sufficient electric field, the liquid crystal layer 310 is switched to the homeotropic state enabling light transmission. The cholesteric liquid crystals of the liquid crystal layer 310 may be switched between the two stable states of the focal conic state and the planar state.

The planar state refers to a state in which helical axes of the cholesteric liquid crystals are aligned in a direction perpendicular to the substrate, e.g., the first substrate 301. The focal conic state refers to a state in which helical axes of the cholesteric liquid crystals are aligned in a direction parallel to the first substrate 301.

For example, when a voltage is applied to the cholesteric liquid crystals of the planar state, the helical axis perpendicular to the first substrate 301 is changed to be parallel to the first substrate 301, and the texture of the cholesteric liquid crystals is switched into the focal conic state.

When a greater voltage is applied to the focal conic state of the cholesteric liquid crystal, the cholesteric liquid crystals are converted into the homeotropic state in which the liquid crystal molecules having an untwisted helical structure are aligning in a direction of the electric field. In this case, the liquid crystal layer molecules may return to the focal conic state by slowing stopping application of the electric field and return to the planar state by rapidly stopping application of the electric field.

Each state of the liquid crystal layer 310 will be described with reference to FIGS. 6 to 8 in detail.

FIG. 6 is a diagram illustrating a homeotropic state of liquid crystal molecules.

When a high electric field is applied to the liquid crystal layer 310, liquid crystal molecules is aligned in the homeotropic state and transmit light.

FIG. 7 is a diagram illustrating a planar state of liquid crystal molecules.

The alignment of liquid crystal molecules in the planar state is an alignment switched from the homeotropic

state by rapidly lowering the high electric field applied to the liquid crystals in the homeotropic state. In the planar state, all helical axes are perpendicular to the surface of a substrate, for example, the first substrate 301.

In the planar state, the cholesteric liquid crystals reflect incident light having a predetermined wavelength. In this regard, the predetermined wavelength is determined by the size of the pitch p of the helical structure of the cholesteric liquid crystal. That is, since the wavelength of reflected light may be determined by adjusting the pitch p, the color of light reflected by the cholesteric liquid crystal may be controlled by adjusting the pitch P.

FIG. 8 is diagram illustrating a focal conic state of liquid crystal molecules.

The alignment of liquid crystal molecules in the focal conic state is an alignment switched from the homeotropic state by slowing lowering the high electric field applied to the liquid crystals in the homeotropic state. In the focal conic state, the helical axes are not aligned but mixed. Thus, light is scattered therein.

Since the helical structures are mixed and the liquid crystals are transparent in the focal conic state, light may pass through the liquid crystals, and thus a transmissive display panel may be realized. In addition, if a light absorbing layer (not shown) is disposed in the display device 300, light passing through the liquid crystal layer 310 is absorbed by the light absorbing layer (not shown), and thus a reflective or semi-transmissive display device may be realized.

FIG. 9 is a view illustrating a structure of a display device 300a according to another embodiment.

Referring to FIG. 9, the display device 300a according to another embodiment includes a first substrate 301, a second substrate 303 spaced apart from the first substrate 301, a first electrode 305 disposed on one surface of the first substrate 301, a second electrode 307 disposed on one surface of the second substrate 303, a liquid crystal layer 310 disposed between the first electrode 305 and the second electrode 307, and a light absorbing layer 311 disposed under the first substrate 301.

The first substrate 301, the second substrate 303, the first electrode 305, the second electrode 307, and the liquid crystal layer 310 are as described above with reference to FIGS. 2 to 8, and descriptions thereof will not be repeated herein.

The light absorbing layer 311 may absorb light that is not used to form an image while the liquid crystal layer 310 of the display device 300a is in the planar state or the focal conic state. Also, a flexible display device 300a may be implemented by forming the light absorbing layer 311 using a flexible material.

An installation position of the light absorbing layer 311 is not limited to that illustrated in FIG. 9 and the light absorbing layer 311 may also be disposed between the first substrate 301 and the second electrode 307.

Hereinafter, a method of manufacturing the display device will be described. The embodiment will be described based on the display device 300 illustrated in FIG. 2 for descriptive convenience.

FIG. 10 is a flowchart for describing a process of manufacturing the display device 300 according to an embodiment. FIGS. 11 to 17 are views illustrating the process of manufacturing the display device 300.

Referring to FIG. 10, a method of manufacturing the display device 300 includes providing a substrate (410), forming the liquid crystal layer 310 by coating a cholesteric liquid crystal composition on the substrate (412), forming barrier walls 320 to separate a plurality of sub-cells by exposing the liquid crystal layer 310 to light (414), and forming a plurality of liquid crystal cells having different reflection wavelengths by exposing the plurality of sub-cells to light (416).

Referring to FIGS. 11 and 12, the providing of the substrate may include providing the first substrate 301 on which the first electrode 305 is formed on one surface thereof, and providing the second substrate 303 on which the second electrode 307 is formed on one surface thereof (410).

The first and second substrates 301 and 303 may be polycarbonate substrates to easily transmit light and may be formed of a flexible material to increase diversity in designing.

The first and second electrodes 305 and 307 may be formed on one surface of the respective first and second substrates 301 and 303 by any method well known in the art such as photolithography.

There is no order between the processes of providing the first substrate 301 and providing the second substrate 303.

Next, referring to FIG. 13, the forming of the liquid crystal layer 310 by coating the cholesteric liquid crystal composition on the substrate may include mixing a photosensitive chiral dopant and a monomer in a cholesteric liquid crystal composition, coating the prepared cholesteric liquid crystal composition on the first substrate 301 to form the liquid crystal layer 310, and bonding the second substrate 303 to the first substrate 301 on which the liquid crystal layer 310 is coated (412).

The cholesteric liquid crystal composition may be coated on the first substrate 301 by spin coating, slit coating, inkjet printing, knife coating, roll printing, offset printing, gravure printing, and the like, without being limited thereto. In this regard, the cholesteric liquid crystal composition may be fixed on the first substrate 301 by using a binder.

The cholesteric liquid crystal composition may include the cholesteric liquid crystal, the monomer, and the photosensitive chiral dopant mixed in a weight ratio of 84.5:12.5:3.0 such that an initial state thereof reflects light having a blue wavelength band.

Hereinafter, the embodiment will be described based on a case in which the initial state of the cholesteric liquid crystal composition reflects light having a blue wavelength band.

As the monomer, an acrylate monomer may be used. More particularly, the monomer may include an acrylate monomer, a crosslinking agent, and a photopolymerization initiator. The acrylate monomer, the crosslinking agent, and the photopolymerization initiator may be mixed in a weight ratio of 90:9:1.

The acrylate monomer may include at least one of isobutyl acrylate, isobutyl methacrylate, and 1,3,5-triallyl-1,3,5-triazine-2,4,6,(1H,3H,5H)-trione.

The crosslinking agent may include at least one of trimethylopropane triacrylate, di(ethylene glycol) diacrylate, and di(ethylene glycol) dimethacrylate.

The photopolymerization initiator may include 2,2-dimethoxy-1,2-diphenylethan-1-one.

Next, referring to FIG. 14, a first mask 322 is located on the second substrate 303, and the liquid crystal layer 310 is exposed to light through the first mask 322 to form the barrier walls 320.

The first mask 322 may be a bandpass filter that transmits light having a predetermined wavelength band, without being limited thereto.

The first mask 322 may have first transmissive portions 322a to transmit light of all wavelengths and second transmissive portion 322b to transmit light having a predetermined wavelength band. Light having passed through the first transmissive portion 322a may form the barrier walls 320 in first regions of the liquid crystal layer 310 corresponding to the first transmissive portions 322a.

For example, under an assumption that light includes light having a fourth wavelength region CL4 and light having a fifth wavelength region, both the light having the fourth wavelength region and the light having the fifth wavelength region pass through the first transmissive portions 322a and arrive at the liquid crystal layer 310 and only the light having the fifth wavelength region passes through the second transmissive portions 322b and arrives at the liquid crystal layer 310.

The liquid crystal layer 310 includes the cholesteric liquid crystal, the monomer, and the photosensitive chiral dopant, and the photosensitive chiral dopant may react with the light having the fourth wavelength region. In this case, when the light having the fourth wavelength region passes through the first transmissive portion 322a and arrives at the liquid crystal layer 310 corresponding to the first transmissive portion 322a, the monomer is polymerized to form a polymer by the light, thereby forming the barrier wall 320. As a result, the liquid crystal layer 310 may be partitioned into a plurality of sub-cells including the first sub-cell 314, the second sub-cell 316, the third sub-cell 318 by the barrier walls 320.

Next, as illustrated in FIGS. 15 to 17, a second mask 324 is located on the second substrate 303 and the plurality of sub-cells 314, 316, and 318 are exposed to light to form a plurality of having different reflection wavelengths.

First, as illustrated in FIG. 15, a process of forming the first liquid crystal cell 314a in the first sub-cell 314 may be performed.

The second mask 324 may have a third transmissive portion 324a that transmits light and a first non-transmissive portion 324b that does not transmit light. Thus, if light exposure is performed by using the second mask 324, only the first sub-cell 314 of the liquid crystal layer 310 corresponding to the third transmissive portion 324a is exposed to light to form the first liquid crystal cell 314a.

The pitch p of the first liquid crystal cell 314a may be controlled to reflect light having a first wavelength, e.g., blue wavelength, by an intensity of light applied to the third transmissive portion 324a. The pitch p may be controlled by adjusting the light intensity applied thereto.

Thus, the third transmissive portion 324a of the second mask 324 may transmit light by a first light intensity 11 such that the first liquid crystal cell 314a obtained by light exposure has a pitch P required to reflect light having the blue wavelength.

The liquid crystal layer 310 formed according to the process described above with reference to FIG. 13 may have a pitch p reflecting light having the blue wavelength. In this case, the first liquid crystal cell 314a may be formed without performing a separate light exposure process or by applying a small quantity of light thereto.

Next, as illustrated in FIG. 16, the second mask 324 is moved on the second substrate 303 to locate the third transmissive portion 324a to correspond to the second sub-cell 316 and light exposure is performed.

In this regard, light is applied only to the second sub-cell 316 of the liquid crystal layer 310 corresponding to the third transmissive portion 324a to form the second liquid crystal cell 316a.

The pitch p of the second liquid crystal cell 316a may be controlled to reflect light having a second wavelength, e.g., green wavelength, by an intensity of light applied to the third transmissive portion 324a. The pitch p may be controlled by adjusting the light intensity applied thereto.

Thus, the third transmissive portion 324a of the second mask 324 may transmit light by a second light intensity I2 such that the second liquid crystal cell 316a obtained by light exposure has a pitch P required to reflect light having the green wavelength

Meanwhile, the first liquid crystal cell 314a obtained by the previous process and the second liquid crystal cell 316a obtained by the current process have different pitches p. In general, as the intensity of light increases, the pitch p increases and the wavelength of light reflected thereby increases. Thus, the second light intensity 12 may be adjusted to be greater than the first light intensity I1.

Next, as illustrated in FIG. 17, the second mask 324 is moved on the second substrate 303 to locate the third transmissive portion 324a to correspond to the third sub-cell 318 and light exposure is performed.

In this regard, light is applied only to the third sub-cell 318 of the liquid crystal layer 310 corresponding to the third transmissive portion 324a to form the third liquid crystal cell 318a.

The pitch p of the third liquid crystal cell 318a may be controlled to reflect light having a third wavelength, e.g., red wavelength, by an intensity of light applied to the third transmissive portion 324a. The pitch p may be controlled by adjusting the light intensity applied thereto.

Thus, the third transmissive portion 324a of the second mask 324 may transmit light by a third light intensity 12 such that the third liquid crystal cell 318a obtained by light exposure has a pitch P required to reflect light having the red wavelength.

Meanwhile, the first and second liquid crystal cells 314a and 316a obtained by the previous processes and the third liquid crystal cell 318a obtained by the current process have different pitches p. In general, as the intensity of light increase, the pitch p increases and the wavelength of light reflected thereby increases as described above. Thus, the third light intensity 13 may be adjusted to be greater than the second light intensity 12, and the second light intensity 12 may be adjusted to be greater than the first light intensity 11.

Light exposure according to FIGS. 13 to 17 may be performed by using UV light.

Briefly, according to the method of manufacturing the display device 300 according to an embodiment, although the liquid crystal layer 310 in which the sub-cells 314, 316, and 318 are not partitioned is formed during the bonding process, the liquid crystal cells 314a, 316a, and 318a having different pitches p respectively reflecting light having different wavelengths may be formed in the liquid crystal layer 310 by exposing the sub-cells 314, 316, and 318 to different intensities of light.

In this case, the first, second, and third liquid crystal cells 314a, 316a, and 318a constituting respective pixels are formed of the same type of liquid crystals in which different polymer networks are formed. Therefore, the display device 300 may be driven by applying the same driving voltage to the sub-cells 314, 316, and 318.

Hereinafter, the present disclosure will be described in more detail with reference to the following example, However, the example is not intended to limit the purpose and scope of the present disclosure.

Example 1

A cholesteric liquid crystal, a monomer, and a photosensitive chiral dopant were mixed in a weight ratio of 84.5:12.5:3.0. As the cholesteric liquid crystal, CH100-650 available from Slichem was used.

The double refractive indices of CH100-650 were 1.66 for ne (principal axis) and 1.502 for no (vertical axis), and the dielectric anisotropy thereof was 27.8. The monomer may include an acrylate monomer, a crosslinking agent, and a photopolymerization initiator mixed in a weight ratio of 90:9:1. The monomer was isotropic at room temperature. As the photosensitive chiral dopant, methyloxy-cinnamoylglucitol was used. Methyloxy-cinnamoylglucitol reacts with UV light having a wavelength of about 350 nm or less.

The mixture was coated on a polycarbonate plastic substrate coated with lithium zinc oxide to form a liquid crystal layer 310, and the liquid crystal layer 310 was exposed to UV light by using a UV bandpass filter having a bandwidth of 355 to 370 nm available from Edmond Optics to form barrier walls 320. Then, first, second, and third liquid crystal cells 314a, 316a, and 318a were formed to reflect blue, green, and red lights, by applying different intensities of UV light to the pixels respectively.

Evaluation

Driving voltages of the display device 300 fabricated according to Example 1 were measured, and the results are shown in FIG. 18.

As illustrated in FIG. 18, the same driving voltage was observed from the liquid crystal cells 314a, 316a, and 318a (Vb = Vg = Vr). That is, it was confirmed that the driving voltages of the liquid crystal cells 314a, 316a, and 318a may be adjusted to be the same by varying the degrees of formation of the polymer networks in the respective sub-cells 314, 316, and 318 by adding methyloxy-cinnamoylglucitol, as the photosensitive chiral dopant, to the same type of cholesteric liquid crystals.

The display device 300 and the method of manufacturing the same have been described above. However, the present disclosure is not limited thereto.

## Claims

**1.** A display device comprising:

a first substrate;
a second substrate; and
a liquid crystal layer disposed between the first substrate and the second substrate and comprising a plurality of sub-cells,
wherein the plurality of sub-cells respectively comprises a cholesteric liquid crystal and a polymer cured to fix a helical pitch of the cholesteric liquid crystal.

2. The display device according to claim 1, wherein the helical pitches are adjusted to reflect light having different wavelength bands.

3. The display device according to claim 1, further comprising barrier walls partitioning the liquid crystal layer into a plurality of sub-cells.

4. The display device according to claim 1, wherein the plurality of sub-cells has different polymer network structures to reflect light having different wavelength bands.

5. The display device according to claim 1, further comprising a light absorbing layer disposed under the liquid crystal layer.

6. A method of manufacturing a display device, the method comprising:

mixing a monomer and a photosensitive chiral dopant in a cholesteric liquid crystal composition;
forming a liquid crystal layer by coating the liquid crystal composition on a substrate; and
forming a plurality of liquid crystal cells having different reflection wavelengths by exposing the liquid crystal layer to light.

7. The method according to claim 6, wherein the monomer comprises at least one acrylate monomer selected from isobutyl acrylate, isobutyl methacrylate, 1,3,5-triallyl-1,3,5-triazine-2,4,6,(1H,3H,5H)-trione.

8. The method according to claim 6, wherein the monomer comprises an acrylate monomer, a crosslinking agent, and a photopolymerization initiator mixed in a ratio of 90:9:1 in the mixing of the monomer in the cholesteric liquid crystal composition.

9. The method according to claim 6, wherein the mixing of the monomer and the photosensitive chiral dopant in the cholesteric liquid crystal composition comprises mixing the cholesteric liquid crystal, the monomer, and the photosensitive chiral dopant in a weight ratio of 84.5:12.5:3.0.

10. The method according to claim 6, wherein the photosensitive chiral dopant comprises methyloxy-cinnamoylglucitol in the mixing of the photosensitive chiral dopant in the cholesteric liquid crystal composition.

11. The method according to claim 6, further comprising forming barrier walls to partition the liquid crystal layer into a plurality of sub-cells by exposing the liquid crystal layer to light.

12. The method according to claim 11, wherein the exposing of the liquid crystal layer to light comprises exposing the liquid crystal layer to light by using a UV band pass filter.

13. The method according to claim 11, wherein the forming of a plurality of liquid crystal cells having different reflection wavelengths by exposing the liquid crystal layer to light comprises forming a plurality of liquid crystal cells having different reflection wavelengths by exposing the plurality of sub-cells to light.

14. The method according to claim 6, wherein the forming of a plurality of liquid crystal cells having different reflection wavelengths by exposing the liquid crystal layer to light comprises forming a plurality of liquid crystal cells having different reflection wavelengths by adjusting the degrees of formation of polymer networks of the monomer depending on an exposure dose.

15. The method according to claim 6, wherein the forming of a plurality of liquid crystal cells having different reflection wavelengths by exposing the liquid crystal layer to light comprises forming red, green, and blue liquid crystal cells having pitches respectively corresponding to red, green, and blue wavelength bands.

**16.** The method according to claim 6, wherein the substrate is fabricated by coating at least one of indium tin oxide (ITO), indium zinc oxide (IZO), and aluminum-doped zinc oxide (ZAO) on a polycarbonate substrate in the forming of a liquid crystal layer by coating the liquid crystal composition on a substrate.

[Fig. 1]

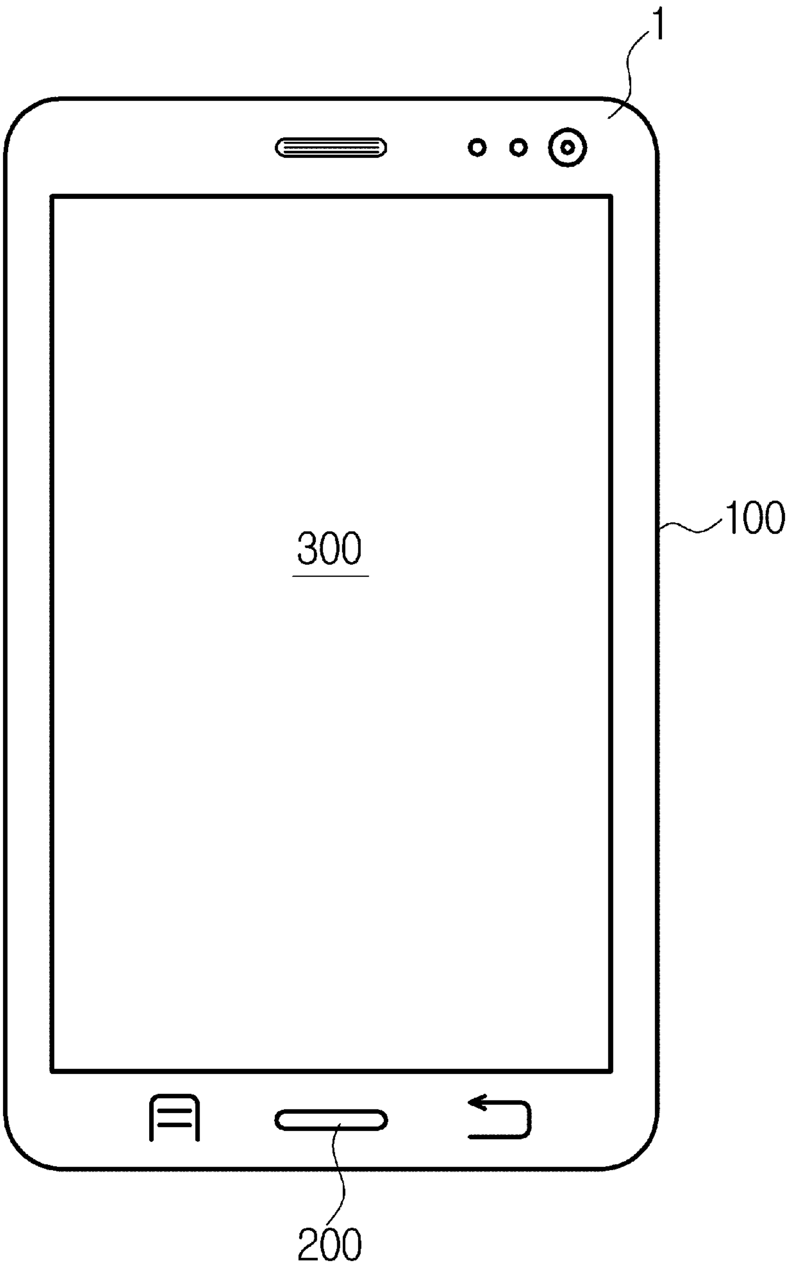

[Fig. 2]

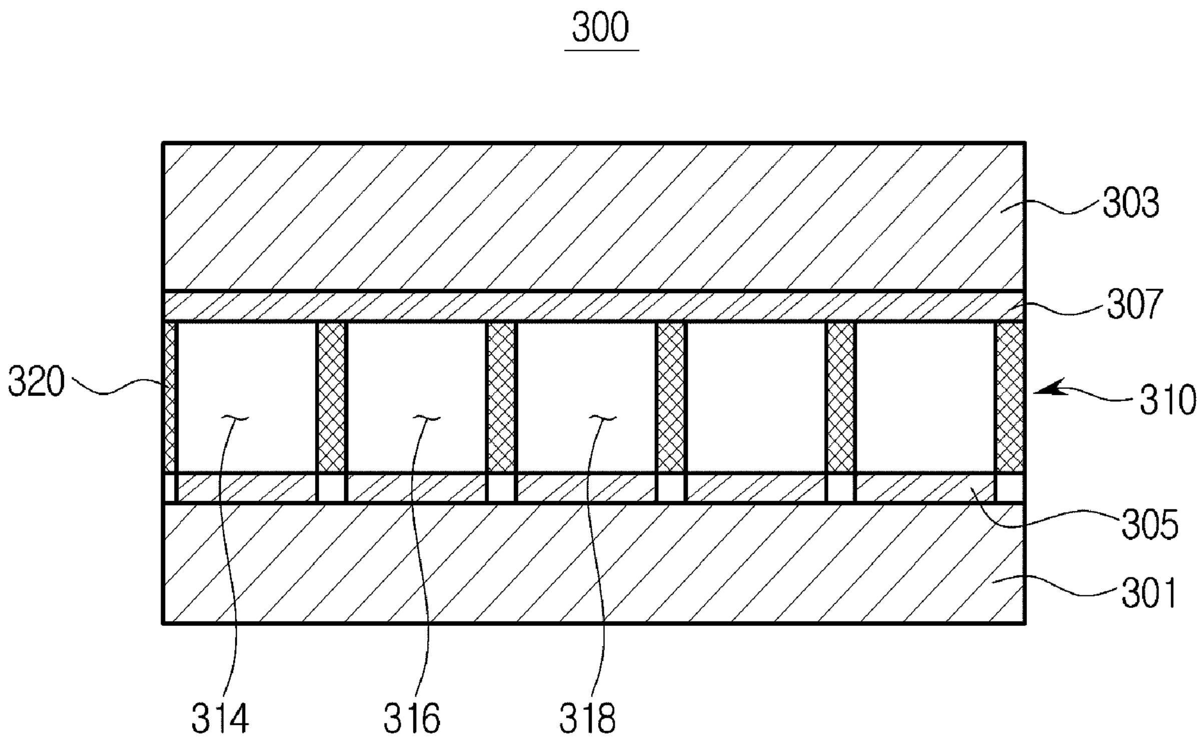


[Fig. 3]

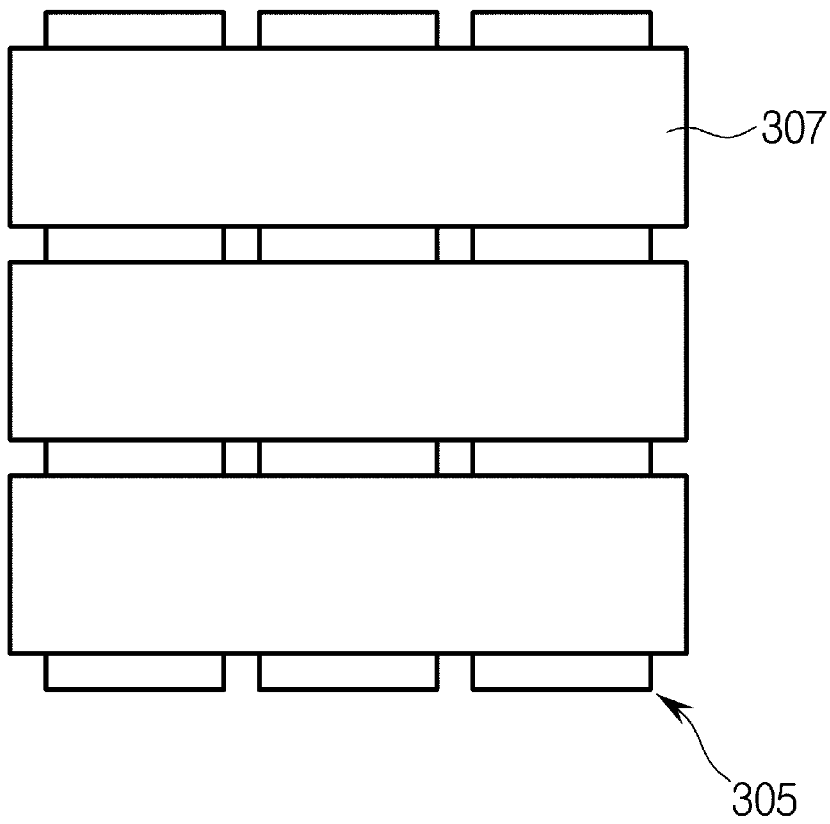

[Fig. 4]

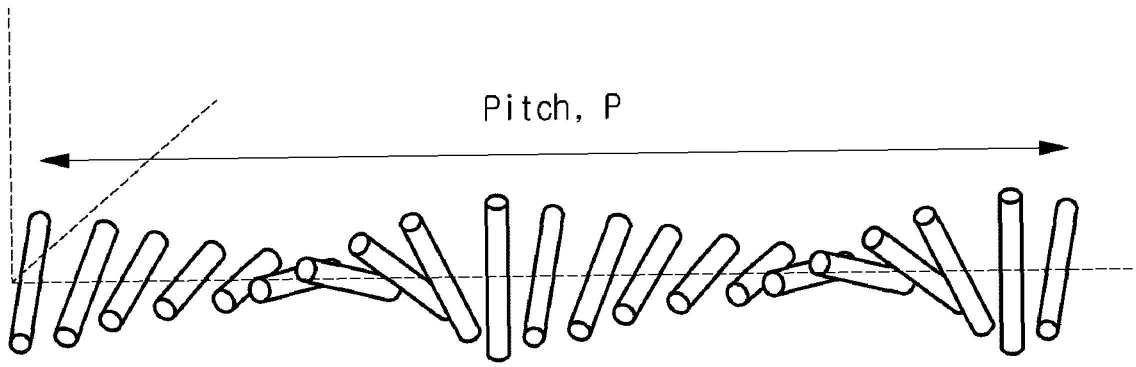


[Fig. 5]

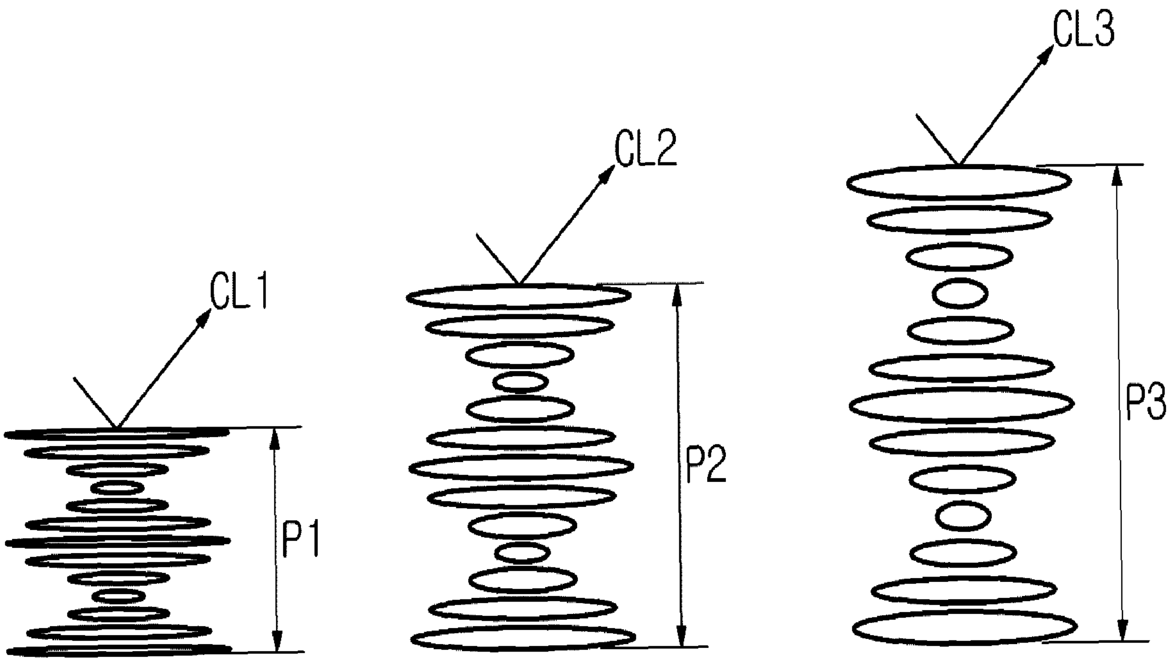

[Fig. 6]

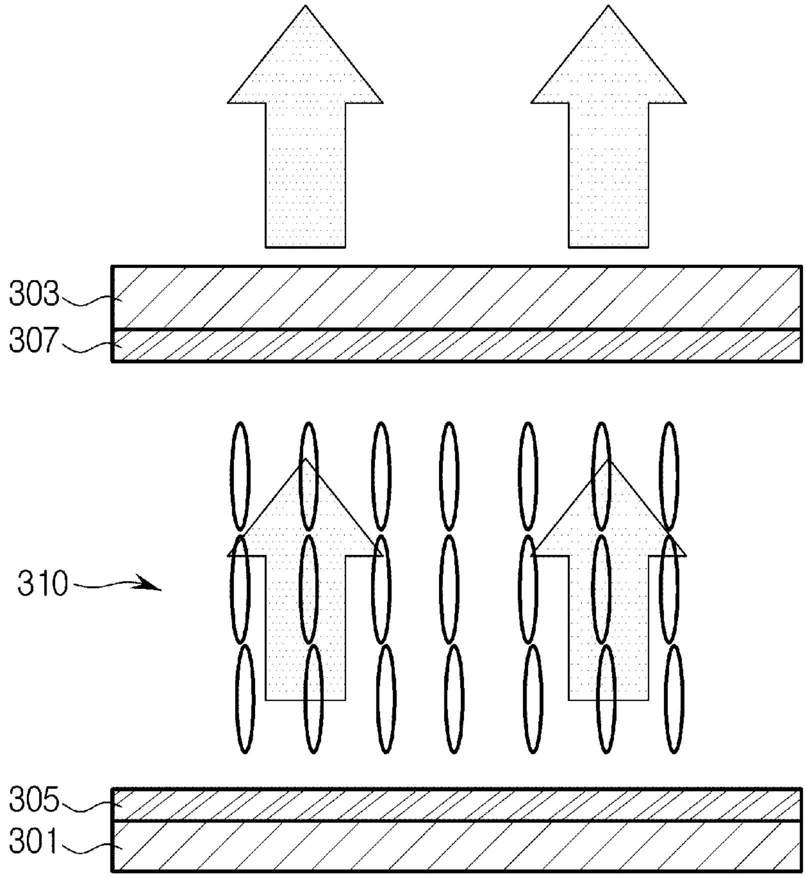


[Fig. 7]

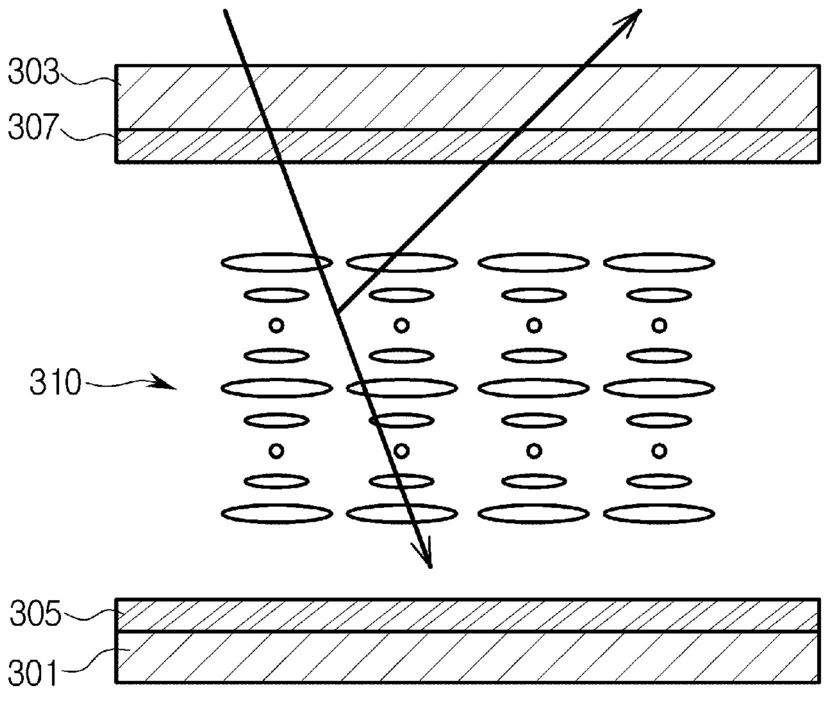

[Fig. 8]

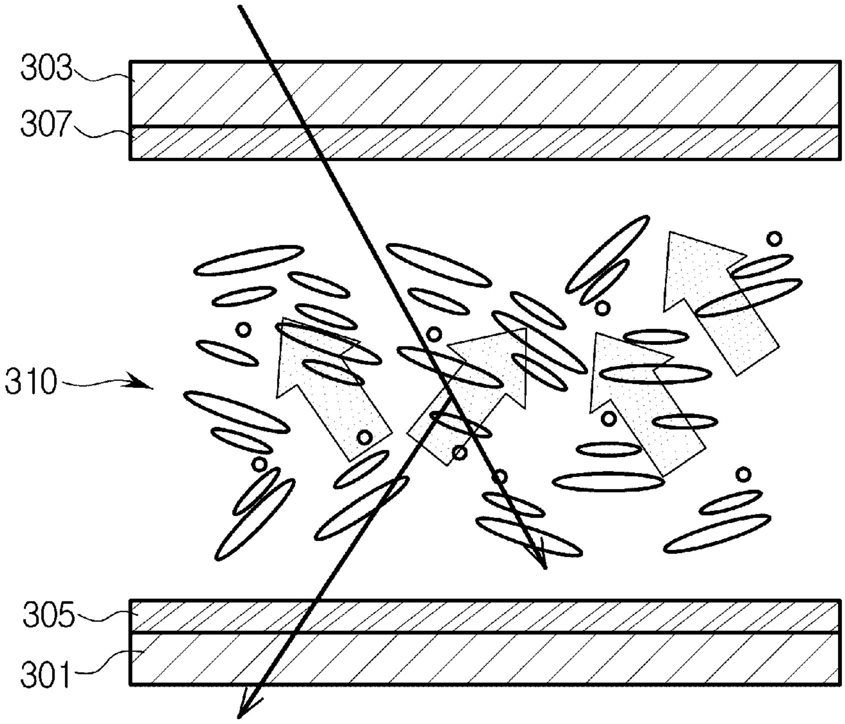


[Fig. 9]

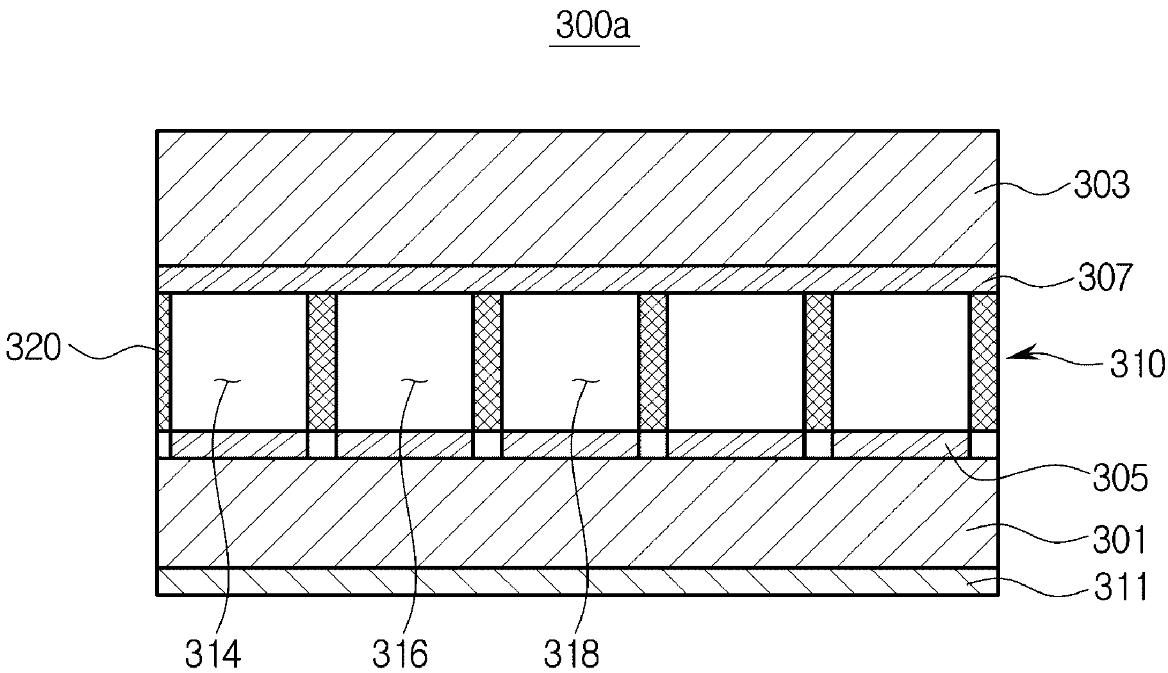

[Fig. 10]

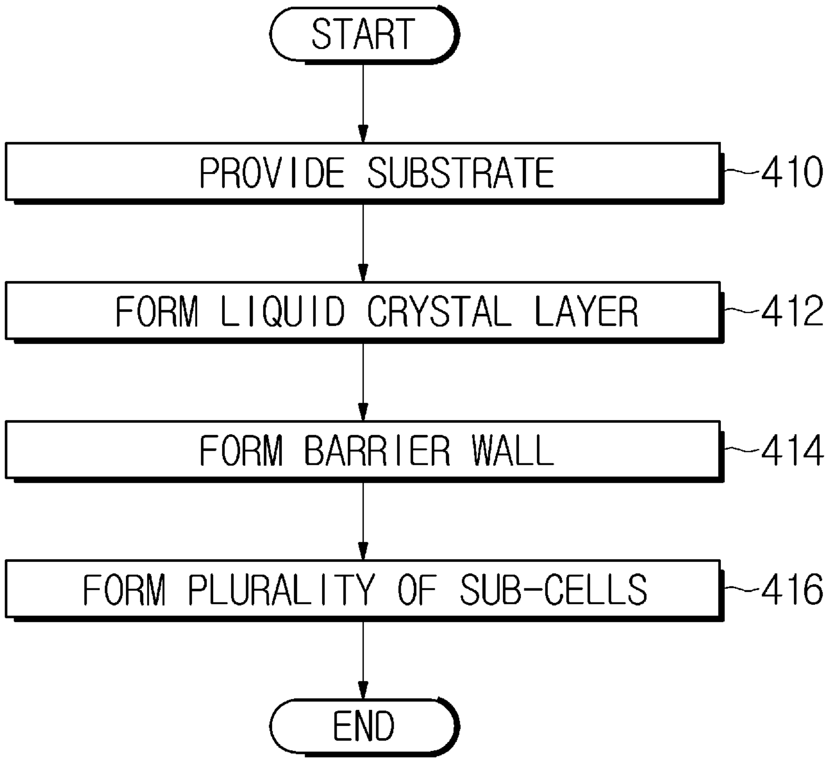


[Fig. 11]

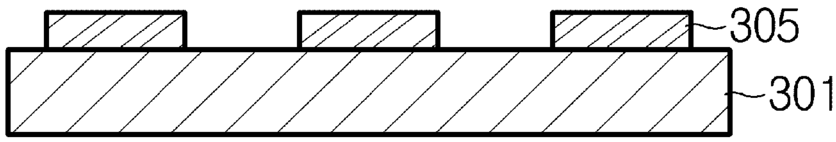


[Fig. 12]

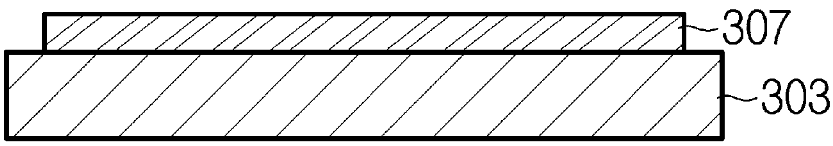

[Fig. 13]

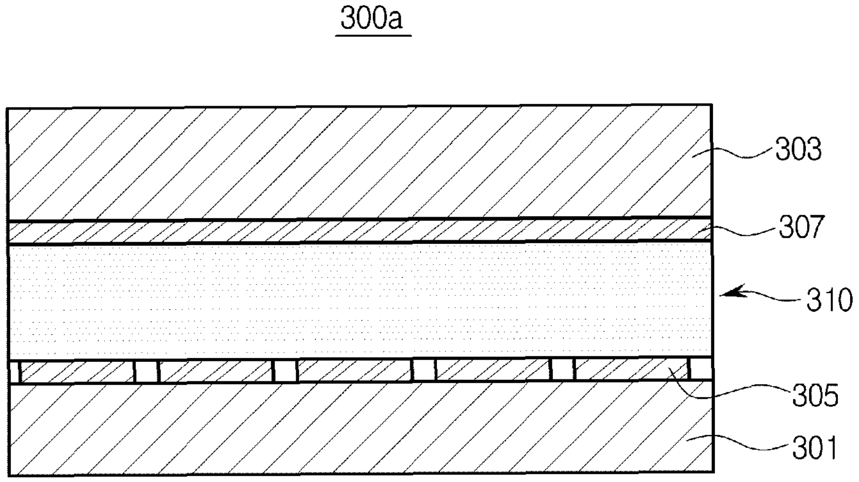
300a
303
307
310
305
301

[Fig. 14]

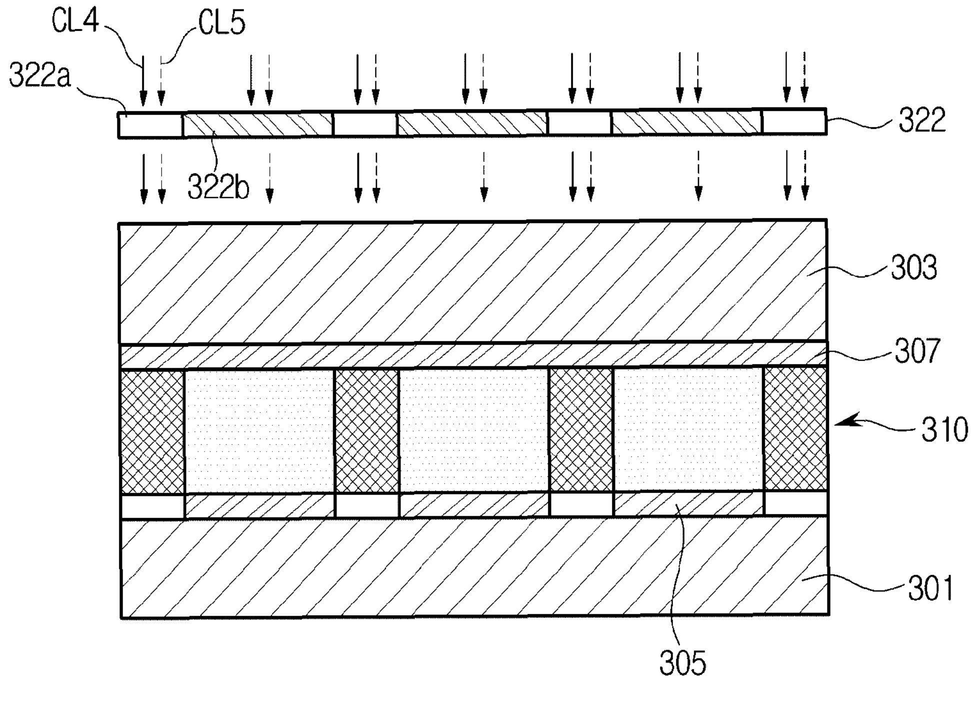
CL4
CL5
322a
322
322b
303
307
310
301
305

[Fig. 15]

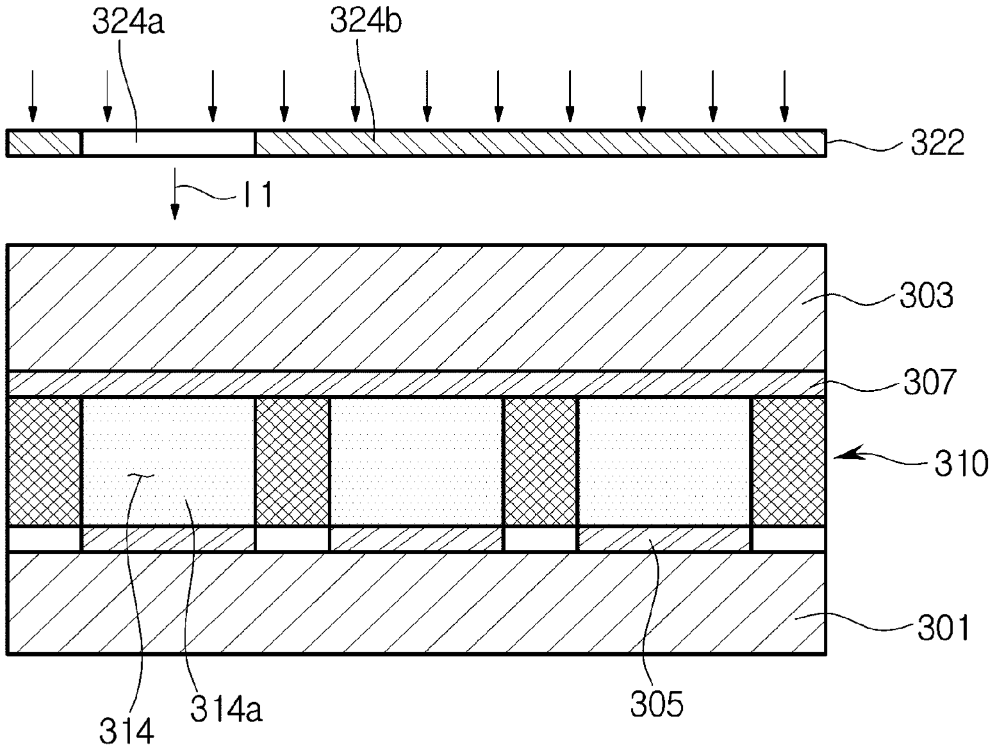
324a
324b
322
L1
303
307
310
301
314
314a
305

[Fig. 16]

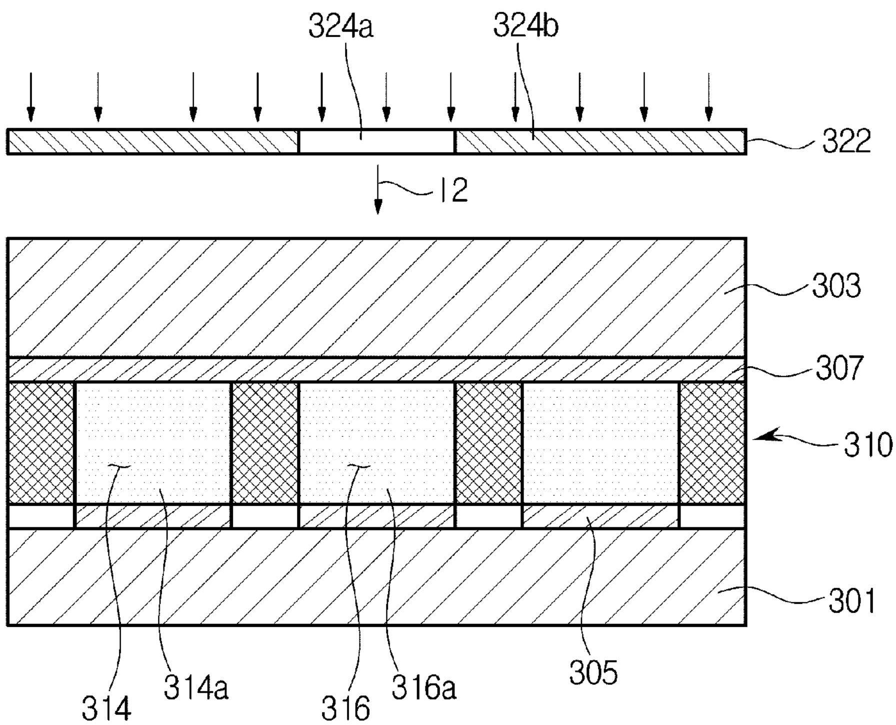
324a
324b
322
L2
303
307
310
301
314
314a
316
316a
305

[Fig. 17]

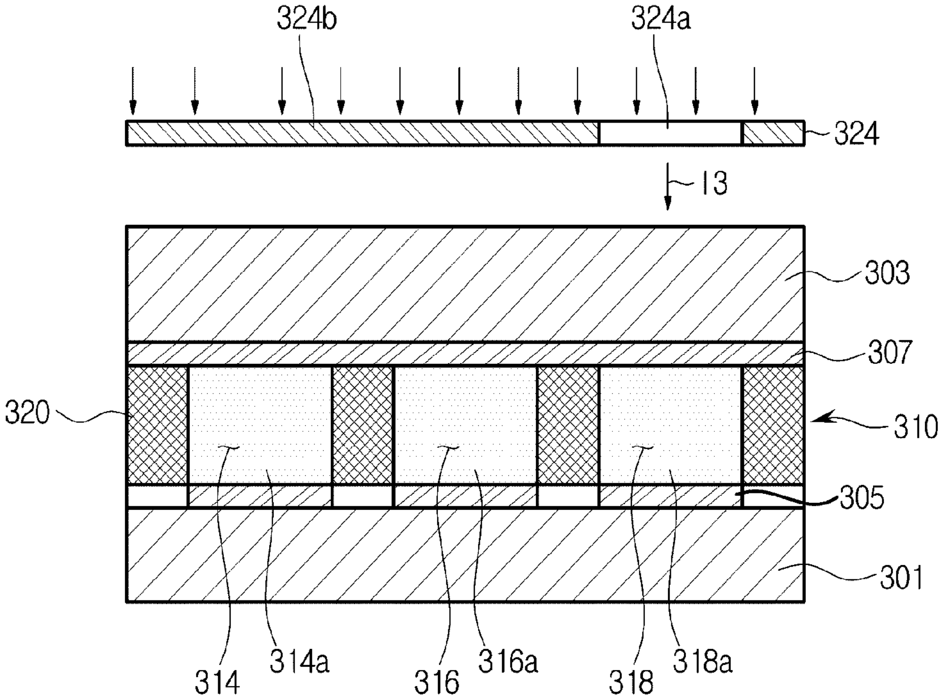
324b
324a
324
13
303
307
320
310
305
301
314
314a
316
316a
318
318a

[Fig. 18]

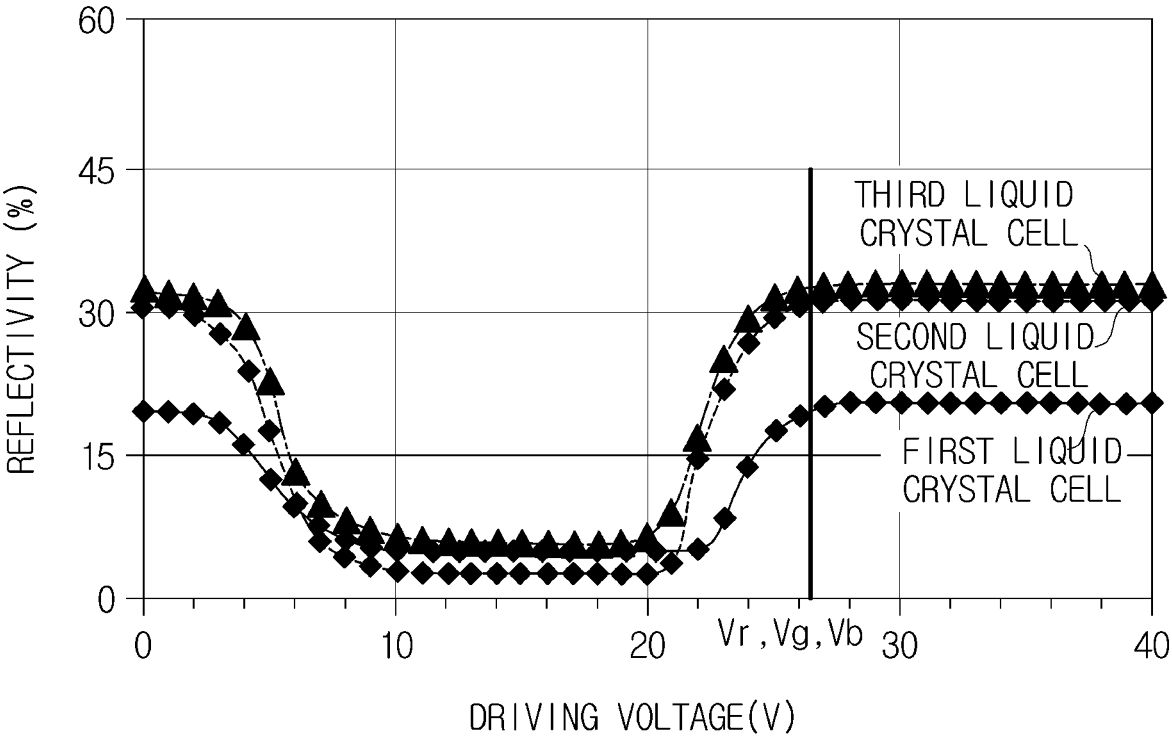
60
45
30
15
0
REFLECTIVITY (%)
0
10
20
Vr, Vg, Vb
30
40
DRIVING VOLTAGE(V)
THIRD LIQUID CRYSTAL CELL
SECOND LIQUID CRYSTAL CELL
FIRST LIQUID CRYSTAL CELL

## INTERNATIONAL SEARCH REPORT

International application No.
**PCT/KR2015/004090**

A. CLASSIFICATION OF SUBJECT MATTER

***G02F 1/137(2006.01)i, G02F 1/1334(2006.01)i***

According to International Patent Classification (IPC) or to both national classification and IPC

B. FIELDS SEARCHED

Minimum documentation searched (classification system followed by classification symbols)
G02F 1/137; C09K 13/00; G02F 1/1334; G02F 1/1335

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: cholesteric, ultraviolet rays, liquid crystal, partition wall, electrode, wavelength, photopolymerizable polymer, chiral dopant(chiral dopant)

C. DOCUMENTS CONSIDERED TO BE RELEVANT

| Category* | Citation of document, with indication, where appropriate, of the relevant passages | Relevant to claim No. |
|---|---|---|
| X | KR 10-2011-0009557 A (SAMSUNG ELECTRONICS CO., LTD. et al.) 28 January 2011 See paragraphs [0014]-[0028], [0035]-[0039], [0051]-[0053]; claims 1, 3, 7, 18; and figures 1, 3c, 4g. | 1-15 |
| Y | | 16 |
| Y | KR 10-2012-0035424 A (SAMSUNG ELECTRONICS CO., LTD. et al.) 16 April 2012 See paragraphs [0039]-[0045], [0047]-[0054]; claim 1; and figures 1, 3-8. | 16 |
| A | KR 10-2012-0063680 A (LG DISPLAY CO., LTD.) 18 June 2012 See paragraphs [0036]-[0054]; and figure 2. | 1-16 |
| A | KR 10-2013-0041718 A (LG DISPLAY CO., LTD.) 25 April 2013 See paragraphs [0014], [0050]-[0058]; claim 1; and figure 2. | 1-16 |
| A | KR 10-2013-0132166 A (NDIS CORPORATION) 04 December 2013 See paragraphs [0019]-[0030]; claims 1-2, 8; and figure 1. | 1-16 |

☐ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 AUGUST 2015 (06.08.2015) | **07 AUGUST 2015 (07.08.2015)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

**INTERNATIONAL SEARCH REPORT**
Information on patent family members

International application No.
**PCT/KR2015/004090**

| Patent document cited in search report | Publication date | Patent family member | Publication date |
|---|---|---|---|
| KR 10-2011-0009557 A | 28/01/2011 | US 2011-0019132 A1<br>US 8456594 B2 | 27/01/2011<br>04/06/2013 |
| KR 10-2012-0035424 A | 16/04/2012 | US 2012-0081644 A1<br>US 8749743 B2 | 05/04/2012<br>10/06/2014 |
| KR 10-2012-0063680 A | 18/06/2012 | NONE | |
| KR 10-2013-0041718 A | 25/04/2013 | JP 2013-088567 A | 13/05/2013 |
| KR 10-2013-0132166 A | 04/12/2013 | KR 10-1346762 B1 | 31/12/2013 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CH 100650